# EUROPÄISCHE PATENTSCHRIFT

(11) **EP 2 808 488 B1**
(45) Veröffentlichungstag und Bekanntmachung des Hinweises auf die Patenterteilung: **11.07.2018**
(21) Anmeldenummer: 14166945.7
(22) Anmeldetag: 05.05.2014
(51) Int. Cl.: C21D 7/06, C21D 9/50, C22F 1/10, F01D 25/00, C22F 1/18, F01D 5/28

(54) **TiAl-Schaufel mit Oberflächenmodifizierung**
TiAl blade with surface modification
Aube en TiAl dotée d'une modification de surface

(30) Priorität: 29.05.2013 DE 102013209994
(43) Veröffentlichungstag der Anmeldung: 03.12.2014
(73) Patentinhaber: MTU Aero Engines AG, 80995 München (DE)
(72) Erfinder: Dr. Werner, André, 80639 München (DE); Dr. Smarsly, Wilfried, 81669 München (DE)

(56) Entgegenhaltungen:
- EP-A1- 1 308 529
- DE-A1- 10 355 756
- DE-A1-102009 023 060
- US-B1- 6 551 064

## Beschreibung

### HINTERGRUND DER ERFINDUNG

### GEBIET DER ERFINDUNG

Die vorliegende Erfindung betrifft ein Bauteil für eine Strömungsmaschine mit mindestens einem Bereich aus einem intermetallischen Werkstoff, insbesondere eine TiAl - Schaufel für eine stationäre Gasturbine oder ein Flugzeugtriebwerk sowie ein Verfahren zur Herstellung eines derartigen Bauteils.

### STAND DER TECHNIK

Intermetallische Werkstoffe, wie Titanaluminide, die zu einem großen Anteil aus intermetallischen Phasen bestehen, sind für bestimmte Anwendungen, wie beispielsweise im Flugzeugturbinenbau, interessant, da sie aufgrund ihrer Struktur und ihrer chemischen Bindungen hohe Festigkeiten aufweisen können und gleichzeitig, wie insbesondere bei Werkstoffen auf Basis von Titanaluminiden (TiAl - Werkstoffe), aufgrund eines niedrigen spezifischen Gewichts Bauteile mit niedrigem Gewicht bilden können.

Allerdings bedürfen die TiAl - Werkstoffe für den Einsatz in stationären Gasturbinen oder Flugzeugtriebwerken in bestimmten Anwendungsfällen einer zusätzlichen Oberflächenmodifizierung, um sämtlichen Anforderungen gerecht zu werden.

So ist es beispielsweise bekannt, bei TiAl - Schaufeln von Gasturbinen im Bereich der Anlageflächen von Deckbändern benachbarter Schaufeln, dem sogenannten z-notch, Plättchen aus einer verschleißfesten Legierung, wie beispielsweise der Legierung Tribaloy T800 (Handelsbezeichnung der Firma Deloro Stellite Holdings Corporation) aufzulöten, um den Verschleiß zu verringern.

Allerdings sind intermetallische Werkstoffe und entsprechend auch TiAl - Schaufeln schwierig zu löten, sodass die Löt - Verbindung mit den aufgelöteten T800 - Plättchen, den Anforderungen häufig nicht genügt.

Darüber hinaus kann es auch in anderen Bereichen von TiAl - Schaufeln notwendig sein, die Oberfläche zu modifizieren, um beispielsweise die Entstehung von Rissen zu vermeiden, wie sie beispielsweise im Bereich der Schaufelfüße an den Kontaktstellen mit der Scheibennut einer Rotorscheibe oder beim Auftreffen von Partikeln auf das Schaufelblatt entstehen können. In der DE 103 55 756 A wird eine Oberflächenmodifizierung offenbart, die aus einer Kombination einer thermo-mechanischen Behandlung, einer Wärmebehandlung sowie einer Beschichtung besteht und die Schadenstoleranz eines Bauteils auf Basis einer Titan-Aluminium -Legierung merklich verbessert.

### OFFENBARUNG DER ERFINDUNG

### AUFGABE DER ERFINDUNG

Es ist deshalb Aufgabe der vorliegenden Erfindung, eine Oberflächenmodifizierung für Bauteile auf der Basis von intermetallischen Werkstoffen bereitzustellen, sodass einerseits die Verbindung mit anderen Bauteilen, wie beispielsweise Verschleißschutzplatten, verbessert wird, und andererseits die Oberfläche allgemein unempfindlicher gegenüber Rissbildung wird. Eine entsprechende Oberflächenmodifizierung soll einfach und zuverlässig durchführbar sein.

### TECHNISCHE LÖSUNG

Diese Aufgabe wird gelöst durch ein Verfahren zur Herstellung eines Bauteils mit den Merkmalen des Anspruchs 1. Vorteilhafte Ausgestaltungen sind Gegenstand der abhängigen Ansprüche.
Die Erfindung geht aus von der Idee, dass bei intermetallischen Werkstoffen eine Verbesserung der Verbindungseigenschaften zu benachbarten Bauteilen bzw. allgemein eine Beständigkeit der Oberfläche gegenüber Rissbildung dadurch erreicht werden kann, dass in einem ober- oder grenzflächennahen Bereich eine Mikroplastifizierung durchgeführt wird, da eine Mikroplastifizierung der intermetallischen Werkstoffe trotz der hohen Festigkeiten und des teilweise spröden Verhaltens der intermetallischen Phasen gegenüber einer makroskopischen Umformung überraschend gut durchführbar ist. Durch die Mikroplastifizierung kommt es zu einer Verdichtung in dem ober- bzw. grenzflächennahen Bereich oder allgemein zu einer Gefügeveränderung und insbesondere zur Ausbildung von Druckeigenspannungen, die zu einer Erhöhung der Oberflächenfestigkeit und damit einer Reduzierung der Rissbildung führen.
Die Mikroplastifizierung kann unmittelbar im Bereich der Oberfläche eines entsprechenden Bauteils vorgenommen werden oder auch an entsprechenden Grenzflächen, beispielsweise einer Grenzfläche zwischen einer Beschichtung des Bauteils und dem Grundwerkstoff des Bauteils oder einer Grenzfläche, die an einer stoffschlüssigen Verbindung des Bauteils mit einem anderen Bauteil gebildet ist.
Der intermetallische Werkstoff kann auf Basis von Titanaluminiden, Nickelaluminiden oder Siliziden gebildet sein, wobei der Werkstoff als größten Bestandteil eine oder mehrere verschiedene intermetallische Phase auf Basis der genannten Bestandteile enthält.

Die Mikroplastifizierung kann thermisch und/oder mechanisch erfolgen, wobei die Mikroplastifizierung auf einer lokal eng begrenzten mechanischen Verformung und/oder Erwärmung beruht. Beispielsweise kann eine Hochgeschwindigkeitsmikroplastifizierung Verwendung finden, die durch Mikrohämmern, insbesondere Ultraschallhämmern, ausgeführt werden kann, wie sie beispielsweise für den Einsatz bei Metallen und insbesondere bei Aluminiumlegierungen in der US 2007/0068605 A1 beschrieben ist.

Die thermische Mikroplastifizierung kann durch lokale Erwärmung, beispielsweise mittels induktiver Erwärmung, oder durch Strahlerwärmung, wie beispielsweise Laserstrahlen, erzeugt werden. Selbstverständlich ist auch eine Kombination der mechanischen Mikroplastifizierung durch Mikrohämmern und der thermischen Mikroplastifizierung durch lokale Erwärmung möglich.

Zusätzlich kann im Bereich der Mikroplastifizierung ein Mikrolegieren und/oder ein Diffusionsverschweißen erfolgen.

Das Mikrolegieren kann durch mechanisches Legieren erfolgen, wobei entsprechende Legierungsbestandteile vor der Behandlung der Oberfläche durch Pulverauftrag, Lackierung, Aufdampfen oder Aufbringen einer Folie bereit gestellt werden können und anschließend durch Mikrohämmern in die Oberfläche des Bauteils eingebaut werden können. Eine Temperaturbehandlung kann den Vorgang des Legierens unterstützen.

Insbesondere können TiAl - Schaufeln für stationäre Gasturbinen oder Flugzeugtriebwerke in verschiedenen Bereichen mit oder ohne Beschichtung oder Plattierung in ihrer Oberfläche bzw. Grenzfläche modifiziert werden, um sie dem Anforderungsprofil für den Einsatz in entsprechenden Gasströmungsmaschinen anzupassen.

### KURZBESCHREIBUNG DER FIGUREN

Die beigefügten Zeichnungen zeigen in rein schematischer Weise in
- Fig. 1: eine Seitenansicht einer Schaufel für eine Strömungsmaschine, wie sie bei der vorliegenden Erfindung Verwendung finden kann;
- Fig. 2: eine Draufsicht auf die Deckbänder zweier nebeneinander angeordneter Schaufeln;
- Fig. 3: eine seitliche Querschnittansicht durch ein Bauteil mit einer darauf geschweißten Platte vor der Anwendung der Mikroplastifizierung;
- Fig. 4: eine seitliche Querschnittansicht des Bauteils aus Figur 3 nach Durchführung einer Mikroplastifizierung;
- Fig. 5: eine seitliche Querschnittansicht durch ein Bauteil mit einer aufgebrachten Beschichtung vor Durchführung der Mikroplastifizierung; und in
- Fig. 6: eine seitliche Querschnittansicht des Bauteils aus Figur 5 nach Durchführung der Mikroplastifizierung.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

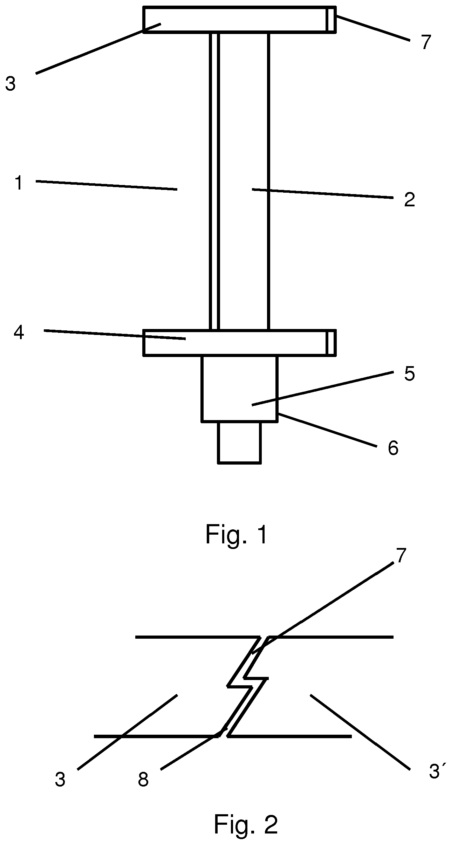

Die Figur 1 zeigt eine rein schematische Seitenansicht einer Schaufel einer stationären Gasturbine oder eines Flugzeugtriebwerks, wie sie beispielsweise im Hochdruckverdichter oder in der Niederdruckturbine eingesetzt werden kann. Die Schaufel 1 weist ein Schaufelblatt 2 auf, welches an der radial äußeren Seite (radial bezogen auf die Anordnung in der Gasturbine) ein äußeres Deckband 3 und im Fußbereich ein inneres Deckband 4 aufweist. Der Fuß 5 der Schaufel 1 dient zum Anordnen der Schaufel 1 in einer Rotorscheibe. Entsprechend weist der Fuß 5 eine Fußflanke 6 auf, die an eine Wand der Aufnahmenut einer Rotorscheibe (nicht gezeigt) anliegt, wenn die Schaufel 1 in einer Rotorscheibe angeordnet ist. Da in einer Rotorscheibe eine Vielzahl von Schaufeln 1 nebeneinander angeordnet sind, liegen auch an den Deckbändern 3,4 Anschlagflächen 7 vor, an denen die Deckbänder 3,4 benachbarter Schaufeln 1 aneinander liegen.

Dies ist in einer Draufsicht der Figur 2 auf die äußeren Deckbänder 3,3' zweier nebeneinander angeordneter Schaufeln verdeutlicht, wobei die Anschlagflächen 7 zwischen sich eine z-förmige Nut 8, eine sogenannte z-notch, ausbilden.

Die Anschlagflächen 7 unterliegen durch die Relativbewegung der benachbarten Deckbänder 3,3' zueinander einem besonderen Verschleiß.

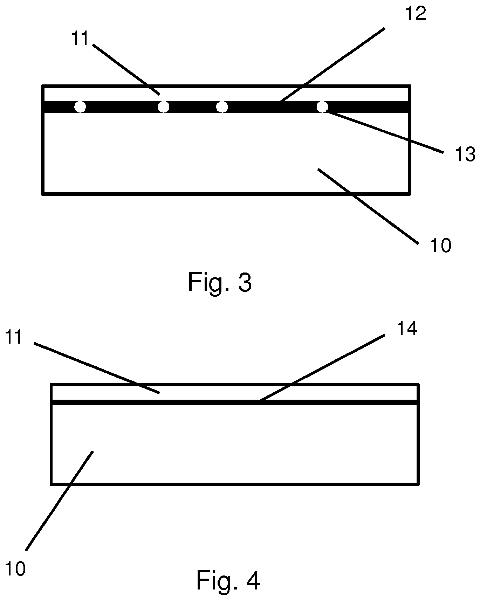

Um bei Schaufeln 1, die aus TiAl - Werkstoffen, also TiAl - Legierungen mit einem großen Anteil intermetallischer Phasen auf Basis von TiAl, gebildet sind, den Verschleiß an den Anschlagflächen 7 zu verringern bzw. so klein wie möglich zu halten, werden die Anschlagflächen 7 mit Plättchen aus einer verschleißbeständigen Legierung, wie beispielsweise einer CoCrMo-Legierung (z.B. T800(Handelsname der Deloro Stellite Holdings Corporation)) versehen, wie dies in einer schematischen Darstellung der Figur 3 gezeigt ist.

Die Figur 3 zeigt ein Bauteil 10, wie beispielsweise das Deckband 3 mit der Anschlagfläche 7 der Schaufel 1 aus Figur 1, auf welchem ein Plättchen aus der Tribaloy T800 - Legierung mit einer Zusammensetzung von 16,5 bis 18,5 Gew.-% Chrom, 27 bis 30 Gew.-% Molybdän, 3 bis 3,8 Gew.-% Silizium und 0 bis 3,0 Gew.-% Nickel und Eisen sowie dem Rest Kobalt über Ultraschallschweißen angeordnet ist. Durch das Ultraschallschweißen des Plättchens 11 auf das Bauteil 10 ist eine Schweißzone 11 ausgebildet, in der jedoch Poren 13 vorhanden sein können. Um die Poren 13 zu beseitigen und die Schweißzone 12 zu verdichten, wird das entsprechende Bauteil 10 mit dem aufgeschweißten Plättchen 11 einer Hochgeschwindigkeitsmikroplastifizierung durch Ultraschallhämmern unterzogen, um die Schweißzone 12 zu verdichten.
Die Figur 4 zeigt das bearbeitete Bauteil 10 nach dem Ultraschallhämmern, wobei die Schweißzone 14 nunmehr verdichtet ist und keine Poren aufweist.
Alternativ zur Verschweißung des Tribaloy T800 - Plättchens 11 mit dem Bauteil 10 mittels Ultraschallschweißen ist auch eine Lötverbindung zwischen dem Plättchen 11 und dem Bauteil 10 möglich, wobei in ähnlicher Weise durch Mikroplastifizierung, beispielsweise in Form von Ultraschallhämmern, eine Verdichtung der Lötschicht bewirkt werden kann. In beiden Fällen wird durch die Verdichtung eine Verbesserung der Verbindung zwischen Plättchen und Bauteil 10 bewirkt.

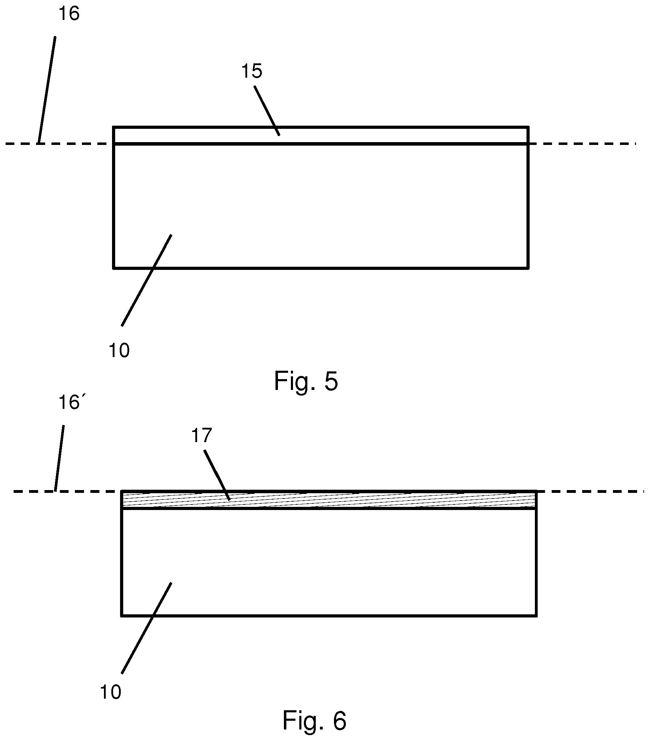

Die Figuren 5 und 6 zeigen nicht zur Erfindung gehörende Beispiele für den Einsatz der Mikroplastifizierung bei der TiAl - Schaufel 1 aus Figur 1. Die Figur 5 zeigt ein Bauteil 10 mit einer Bauteiloberfläche entlang der gestrichelten Linie 16, auf der eine Beschichtung 15 aufgebracht ist. Bei dem Bauteil kann es sich beispielsweise um die Schaufelfußflanke 6 handeln, die durch den Kontakt mit den Nutwänden der Scheibennut ebenfalls hohen Belastungen ausgesetzt ist. Die Beschichtung 15 kann in Form eines Pulvers, einer Folie, eines Lacks oder in Form einer aufgedampften Beschichtung aufgebracht werden. Die Beschichtung kann refraktäre Metalle als verfestigende Elemente für den TiAl - Werkstoff umfassen, wie beispielsweise Niob, Tantal, Molybdän, Wolfram, Platin und/oder Rhenium. Das Bauteil 10 mit der Beschichtung 15 wird wiederum einer Hochgeschwindigkeitsmikroplastifizierung, beispielsweise in Form von Ultraschallhämmern, unterzogen, wobei zusätzlich eine Wärmebehandlung gleichzeitig mit oder nachfolgend zu dem Ultraschallhämmern durchgeführt werden kann, um Diffusion im Oberflächenbereich zu ermöglichen. Die Wärmebehandlung kann hierbei ebenfalls ähnlich wie das Ultraschallhämmern lokal begrenzt durchgeführt werden, beispielsweise durch induktive Erwärmung oder durch Laserstrahlerwärmung, sodass lediglich eng begrenzte Bereiche, insbesondere lediglich oberflächennahe Bereich entsprechend erwärmt werden.

Durch die Mikroplastifizierung durch das Ultraschallhämmern und durch die thermisch induzierte Diffusion kommt es zur Ausbildung einer mechanisch legierten und mikroplastifizierten Zone 17 an der Oberfläche des Bauteils 10, die nunmehr durch die gestrichelte Linie 16' angezeigt wird, wobei die Zone 17 verdichtet und verfestigt ist, sodass Rissbildung beim Einsatz eines entsprechenden Bauteils, beispielsweise in Form eines Schaufelfußes in einer Scheibennut, vermieden wird.

Darüber hinaus gibt es weitere Anwendungsmöglichkeiten der Mikroplastifizierung bei TiAl - Schaufeln beispielsweise im Bereich des Schaufelblatts 2. Die Oberfläche des Schaufelblatts 2 kann alleine durch eine Mikroplastifizierung, also beispielsweise Ultraschallhämmern, verdichtet und verfestigt werden, um gegenüber Rissbildung durch Partikeleinschlag stabilisiert zu werden. Zusätzlich kann die Oberfläche durch mechanisches Legieren weiter modifiziert und verbessert werden.

Das Ultraschallhämmern kann mit einer Arbeitsfrequenz von 1 bis 100 kHz und einer Arbeitsleistung von 10 bis 10.000 Watt, sowie einer Wirkkraft von 5 Newton bis 5.000 Newton durchgeführt werden. Die Bearbeitung kann impulsartig erfolgen, insbesondere in kurzen Impulsen mit einer Zeitdauer von 0,1 bis 5 Sekunden.

Obwohl die vorliegende Erfindung anhand von Ausführungsbeispielen detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der Merkmale verwirklicht werden können, ohne dass der Schutzbereich der beigefügten Ansprüche verlassen wird. Die vorliegenden Offenbarung schließt sämtliche Kombinationen der vorgestellten Einzelmerkmale mit ein.

## Patentansprüche

1. Verfahren zur Herstellung eines Bauteils für eine Strömungsmaschine bei welchem ein Bauteil mit mindestens einem Bereich aus einem intermetallischen Werkstoff, der aus einer intermetallischen Verbindung gebildet ist oder eine intermetallische Phase als größten Bestandteil, insbesondere zu mehr als 50 Vol.-% umfasst, bereitgestellt wird,
wobei bei dem intermetallischen Werkstoff zumindest teilweise an einer Oberfläche oder Grenzfläche in einem ober - oder grenzflächennahen Bereich (14, 17) eine Mikroplastifizierung durchgeführt wird,
**dadurch gekennzeichnet, dass**
vor der Mikroplastifizierung auf dem der Mikroplastifizerung unterzogenen Bereich eine Platte (11) aufgebracht wird.

2. Verfahren nach Anspruch 1,
**dadurch gekennzeichnet, dass**
die Mikroplastifizierung thermisch und/oder mechanisch erfolgt.

3. Verfahren nach einem der Ansprüche 1 oder 2,
**dadurch gekennzeichnet, dass**
die Mikroplastifizierung als eine Hochgeschwindigkeitsmikroplastifizierung durchgeführt wird.

4. Verfahren nach einem der Ansprüche 1 bis 3,
**dadurch gekennzeichnet, dass**
die Mikroplastifizierung durch Mikrohämmern, insbesondere Ultraschallhämmern, erfolgt.

5. Verfahren nach einem der Ansprüche 1 bis 4,
**dadurch gekennzeichnet, dass**
die Platte (11) durch Ultraschallschweißen aufgebracht wird.

6. Verfahren nach einem der vorhergehenden Ansprüche,
**dadurch gekennzeichnet, dass**
die Grenzfläche eine Grenzfläche zu einer Beschichtung des Bauteils oder die Grenzfläche einer stoffschlüssigen Verbindung ist.

7. Verfahren nach einem der vorhergehenden Ansprüche,
**dadurch gekennzeichnet, dass**
der intermetallische Werkstoff ausgewählt ist aus der Gruppe, die Silizide, Nickelaluminide und Titanaluminide umfasst.

8. Verfahren nach einem der vorhergehenden Ansprüche,
**dadurch gekennzeichnet, dass**
das Bauteil im Bereich (17) der Mikroplastifizierung mikrolegiert und/oder diffusionsverschweißt ist.

9. Verfahren nach einem der vorhergehenden Ansprüche,
**dadurch gekennzeichnet, dass**
das Bauteil eine Schaufel (1) einer Strömungsmaschine mit einem Titanaluminid - Werkstoff ist.

10. Verfahren nach Anspruch 9,
**dadurch gekennzeichnet, dass**
die Schaufel im Bereich der Deckbandanschlagsfläche (7) und/oder der Schaufelfußflanke (6) einen mikroplastifizierten Bereich mit einer Plattierung (11), insbesondere einer Plattierung mit einer Kobaltbasislegierung, oder einen mikroplastifizierten, mikrolegierten Bereich (17) aufweist, wobei der mikrolegierte Bereich mit mindestens einem Element aus der Gruppe legiert ist, die Niob, Tantal, Molybdän, Wolfram, Platin und Rhenium umfasst.

## Claims

1. A method for producing a component for a turbomachine, in which a component is provided which comprises at least one region made of an intermetallic material which is formed from an intermetallic compound or comprises an intermetallic phase as the largest constituent, in particular representing more than 50 vol.%,
microplasticization being carried out in the intermetallic material at least partially at a surface or interface in a region (14, 17) close to the surface or close to the interface,
**characterized in that**
before the microplasticization, a plate (11) is applied to the region subjected to the microplasticization.

2. The method according to claim 1,
**characterized in that**
the microplasticization takes place thermally and/or mechanically.

3. The method according to either claim 1 or claim 2,
**characterized in that**
the microplasticization is carried out as high-speed microplasticization.

4. The method according to any of claims 1 to 3,
**characterized in that**
the microplasticization is brought about by micropeening, in particular by ultrasonic peening.

5. The method according to any of claims 1 to 4,
**characterized in that**
the plate (11) is applied by ultrasonic welding.

6. The method according to any of the preceding claims,
**characterized in that**
the interface is an interface to a coating of the component or the interface of an integral bond.

7. The method according to any of the preceding claims,
**characterized in that**
the intermetallic material is selected from the group comprising silicides, nickel aluminides and titanium aluminides.

8. The method according to any of the preceding claims,
**characterized in that**
the component is micro-alloyed and/or diffusion welded in the region (17) of the microplasticization.

9. The method according to any of the preceding claims,
**characterized in that**
the component is a blade (1) of a turbomachine comprising a titanium aluminide material.

10. The method according to claim 9,
**characterized in that**
in the region of the shroud stop surface (7) and/or of the blade root flank (6) the blade comprises a microplasticized region with a plating (11), in particular a plating comprising a cobalt base alloy, or a microplasticized, micro-alloyed region (17), the micro-alloyed region being alloyed with at least one element from the group comprising niobium, tantalum, molybdenum, tungsten, platinum, rhenium.

## Revendications

1. Procédé de fabrication d'un composant d'une turbomachine dans laquelle il est prévu un composant comportant dans au moins une partie un matériau intermétallique qui est formé à partir d'un composé intermétallique ou d'une phase intermétallique en tant que composant essentiel, comprenant en particulier jusqu'à plus de 50 % du volume,
dans lequel une micro-plastification est effectuée sur le matériau intermétallique, au moins partiellement sur une surface ou interface dans une zone proche de la surface ou proche de l'interface (14, 17),
**caractérisé en ce que**
avant la micro-plastification, une plaque (11) est appliquée sur la zone soumise à la micro-plastification.

2. Procédé selon la revendication 1,
**caractérisé en ce que**
la micro-plastification s'effectue thermiquement et/ou mécaniquement.

3. Procédé selon une des revendications 1 ou 2,
**caractérisé en ce que**
la micro-plastification est effectuée sous forme de micro-plastification à grande vitesse.

4. Procédé selon une des revendications 1 à 3,
**caractérisé en ce que**
la micro-plastification s'effectue par des micro-marteaux, en particulier des micro-marteaux à ultrasons.

5. Procédé selon une des revendications 1 à 4,
**caractérisé en ce que**
la plaque (11) est appliquée par soudure par ultrasons.

6. Procédé selon une des revendications précédentes,
**caractérisé en ce que**
l'interface est une interface pour le revêtement du composant ou l'interface est un composé relié par liaison de matière.

7. Procédé selon une des revendications précédentes,
**caractérisé en ce que**
le matériau intermétallique est sélectionné parmi le groupe comprenant les siliciures, les aluminures de nickel et les aluminures de titane.

8. Procédé selon une des revendications précédentes,
**caractérisé en ce que**
le composant dans la zone (17) de la micro-plastification est micro-allié et/ou soudé par diffusion.

9. Procédé selon une des revendications précédentes,
**caractérisé en ce que**
le composant est une aube (1) d'une turbomachine comportant un matériau en aluminure de titane.

10. Procédé selon la revendication 9,
**caractérisé en ce que**
l'aube présente, au niveau de la surface de butée de bande de recouvrement (7) et/ou des flancs de pied de l'aube (6), une zone micro-plastifiée avec un plaquage (11), en particulier un plaquage avec un alliage à base de cobalt, ou une zone (17) micro-plastifiée avec micro-alliage, dans laquelle la zone avec micro-alliage est faite d'un alliage comprenant au moins un élément issu du groupe comprenant le niobium, le tantale, le molybdène, le tungstène, le platine et le rhénium.
